(19) Europäisches Patentamt
European Patent Office
Office européen des brevets

(11) **EP 1 965 350 A1**

(12) **EUROPEAN PATENT APPLICATION**
published in accordance with Art. 158(3) EPC

(43) Date of publication:
**03.09.2008 Bulletin 2008/36**

(51) Int Cl.:
**G06T 3/00** (2006.01)     **G06T 7/00** (2006.01)
**H04N 1/387** (2006.01)

(21) Application number: **06834017.3**

(22) Date of filing: **05.12.2006**

(86) International application number:
**PCT/JP2006/324262**

(87) International publication number:
**WO 2007/072678 (28.06.2007 Gazette 2007/26)**

(84) Designated Contracting States:
**DE FR GB**

(30) Priority: **21.12.2005 JP 2005368224**

(71) Applicant: **NIKON CORPORATION**
**Tokyo (JP)**

(72) Inventor: **ABE, Hiroyuki**
**Chiyoda-ku, Tokyo 1008331 (JP)**

(74) Representative: **Walaski, Jan Filip et al**
**Venner Shipley LLP**
**20 Little Britain**
**London EC1A 7DH (GB)**

(54) **IMAGE COMBINING METHOD, IMAGE COMBINING PROGRAM, IMAGE COMBINING DEVICE, TEMPLATE EXTRACTING METHOD, AND TEMPLATE EXTRACTING PROGRAM**

(57)     An image combining method for executing a template matching process to specify matching positions in a plurality of images with image patterns therein substantially matching one another and combining the plurality of images so that the matching positions are aligned with one another includes extraction processing through which a plurality of areas (a plurality of templates) to be used as templates in the template matching process are extracted from a reference image.

FIG.1

## Description

### TECHNICAL FIELD

The present invention relates to an image combining method, an image combining apparatus and an image combining program, which may be adopted when combining images and a template extraction method and a template extraction program, which may be adopted when extracting a template to be used for combining images.

### BACKGROUND ART

Patent reference literature 1 discloses the template matching device described below. The template matching device executes a matching process on an input image and a template to determine matching positions in the input image and the template.

Patent reference literature 1: Japanese Laid Open Patent Publication No. 2005-293334

### DISCLOSURE OF THE INVENTION

### PROBLEMS TO BE SOLVED BY THE INVENTION

The template matching device in the related art uses a single template to be matched with the input image, giving rise to a concern that an error may occur with respect to the matching positions in the input image and the template if the size of a photographic subject is not uniform in the input image and the template or if the photographic subject is photographed at angles offset relative to each other in the input image and the template.

### MEANS FOR SOLVING THE PROBLEMS

The present invention is characterized in that, for executing a template matching process to specify matching positions in a plurality of images with image patterns therein substantially matching one another and combining the plurality of images so that the matching positions are aligned with one another, a plurality of areas (a plurality of templates) to be used as templates in the template matching process are extracted from a reference image.
It is preferable that the plurality of templates include at least one translational correction template used for positional alignment of the reference image and another image along a vertical direction or a horizontal direction and at least one rotational correction template used for positional alignment of the reference image and the other image along a rotational direction. The plurality of templates may include both the translational correction template and the rotational correction template.
The present invention is also characterized in that, for extracting a template to be used in a template matching process executed to determine matching positions in a plurality of images with image patterns therein substantially matching one another, an area to be used as the template, among a plurality of areas obtained by dividing a reference image into a plurality of areas, is extracted based upon results of evaluation of image patterns in the plurality of areas executed based upon a specific evaluation value.
It is desirable that the specific evaluation value is a normalized value obtained by normalizing at least one of; a sum of density value differences calculated for all pixels in each area with each density value difference representing a difference between a density value at a pixel and a density value at an adjacent pixel, a standard deviation value indicating a standard deviation of density values at all pixels in the area, a value indicating contrast in the area, an absolute value differences between a density average value in the area and a density average value in an area surrounding the area and an RGB correlation value in the area.

### ADVANTAGEOUS EFFECT OF THE INVENTION

According to the present invention, a plurality of templates are used in template matching so as to match the input image and the templates with a high level of accuracy by improving the accuracy with which the matching process is executed.

### BRIEF DESCRIPTION OF THE DRAWINGS

FIG. 1 is a block diagram showing the structure adopted in the image combining apparatus achieved in an embodiment;

FIG. 2 presents a specific example of a degree of freedom that may be assumed in an imaging plane;

FIG. 3 presents a specific example of the initial image;

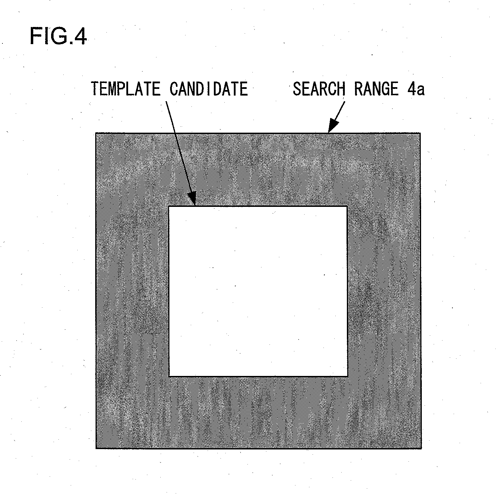

FIG. 4 presents a specific example of a difference in density between a template and an area surrounding the template;

FIG. 5 presents a specific example of a cyclical image;

FIG. 6 schematically illustrates a specific example of template matching;

FIG. 7(a) presents an example of a positional relationship that may exist between the initial image and the combination target image and FIG. 7 (b) illustrates the extent of offset manifested by the initial image and the combination target image;

FIG. 8 presents a specific example of the image combining process and the combining results;

FIG. 9 presents a flowchart of the processing executed by the image combining apparatus; and

FIG. 10 presents a specific example that may be adopted in a variation to abridge the matching calculation.

BEST MODE FOR CARRYING OUT THE INVENTION

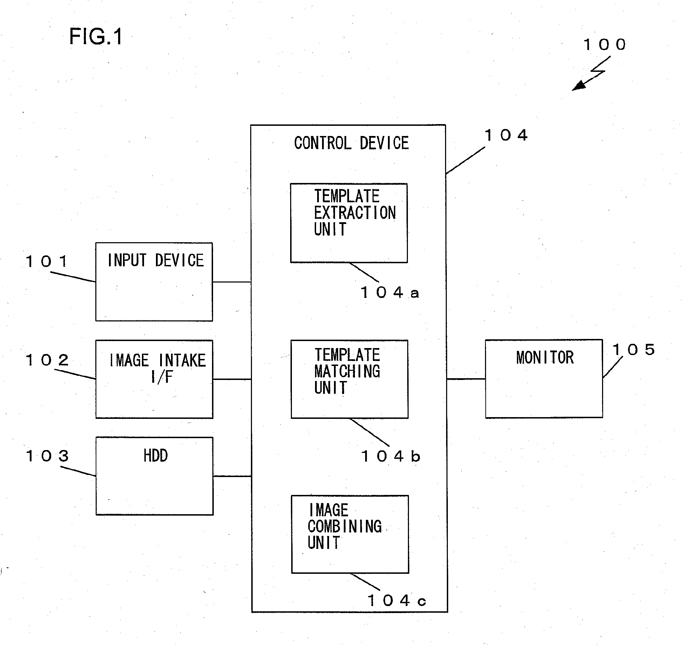

FIG. 1 is a block diagram showing the structure adopted in the image combining apparatus in an embodiment of the present invention. An image combining apparatus 100 may be, for instance, a personal computer. The image combining apparatus 100 includes an input device 101, an image intake I/F 102, a hard disk drive (HDD) 103, a control device 104 and a monitor 105.

The input device 101 is constituted with various types of input instruments operated by the user, including, for instance, a keyboard and a mouse. The image intake I/F 102 is an interface unit via which image data are taken in from an external device such as a digital camera and may be, for instance, a wired interface such as a USB I/F, a wireless I/F such as a wireless LAN or a memory card slot via which data stored in a memory card are read. The HDD 103 is a hard disk drive in which the image data taken in via the image intake I/F 102 and various programs to be detailed later are recorded.

The control device 104, constituted with a CPU, a memory and peripheral circuits, includes functional units such as a template extraction unit 104a, a template matching unit 104b and an image combining unit 104c. As explained later, the control device 104 combines images by executing image processing at the individual functional units 104a through 104c on the image data taken in via the image intake I/F 102 and outputs the resulting combined image to the monitor 105. At the monitor 105, which may be a liquid crystal monitor, the combined image output from the control device 104 is displayed.

Two images 10A and 10B are stored in the HDD 103. The control device 104 designates one image (first image) 10A as an initial image (referenced image) and the other image (second image) 10B as a combination target image. Then it executes template matching for the initial image 10A and the combination target image 10B to combine these images. It is to be noted that the two images 10A and 10B to be combined are images captured in succession by engaging a continuous shooting function or the like of a camera, and it is assumed that those two images are selected in advance by the user.

It is to be noted that the functions fulfilled by the units 104a through 104c at the control device 104 maybe realized in hardware or in software. In the embodiment, the control device 104 executes a program stored in the HDD 103. By doing this, the specific types of processing executed by the individual units are realized in software.

The template extraction unit 104a executes the template evaluation processing to be detailed later on the initial image 10A and extracts two image areas in the initial image 10A as templates to be used in template matching in conjunction with the combination target image 10B. In other words, it extracts two templates.

One of the two templates is a template used for translational correction and the other template is used for rotational correction. As detailed later, the template for translational correction is used when the image combining unit 104c combines the initial image 10A and the combination target image 10B, so as to align the initial image 10A and the combination target image 10B by correcting any positional misalignment manifested by the images along the vertical direction or the horizontal direction. The template for rotational correction is used so as to align the initial image 10A and the combination target image 10B by correcting any positional misalignment manifested by them along the rotational direction.

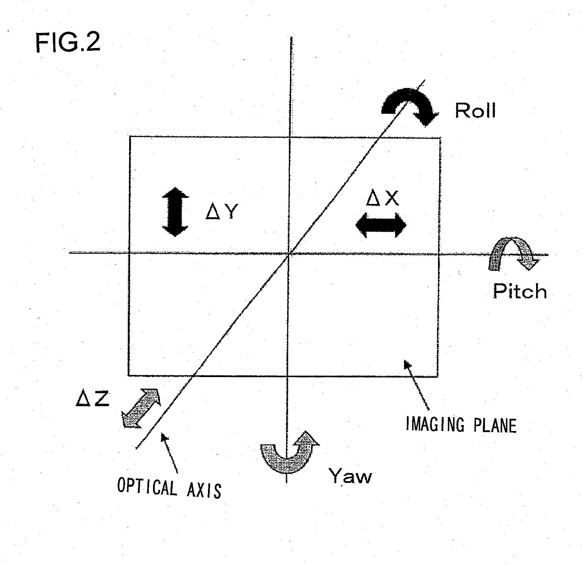

By using a translational correction template and a rotational correction template in image combining as described above, positional misalignment manifested by the initial image 10A and the combination target image 10B along the vertical/horizontal direction and the positional misalignment manifested by the images along the rotational direction can both be corrected to accurately align the images. It is to be noted, however, that, as shown in FIG. 2, the degree of freedom is assumed at the imagingplane along six directions, i.e., $\Delta X$ direction, $\Delta Y$ direction, $\Delta Z$ direction, roll direction, pitch direction and yaw direction. Thus, while the positional misalignment manifested along the $\Delta X$ direction, the $\Delta Y$ direction and the roll direction can be corrected by using the translational correction template and the rotational correction template mentioned earlier, any positional misalignment manifested along any other direction cannot be corrected in the embodiment.

However, as long as the camera is operated in a standard operating method, offsets that manifest along the pitch direction and the yaw direction will both be extremely small. Accordingly, the offsets manifesting along the pitch direction can be absorbed through the correction of the offset manifesting along the $\Delta Y$ direction and the offset manifesting along the yaw direction can be absorbed through the correction of the offset manifesting along the $\Delta X$ direction. It is assumed that an offset along the $\Delta Z$ direction, which does not occur unless the user performs a photographing operation under extremely unusual conditions, e.g., capturing images while walking, does not need to be taken into consideration.

The template extraction unit 104a executes the following specific processing to extract the translational correction template and the rotational correction template from the initial image 10A.

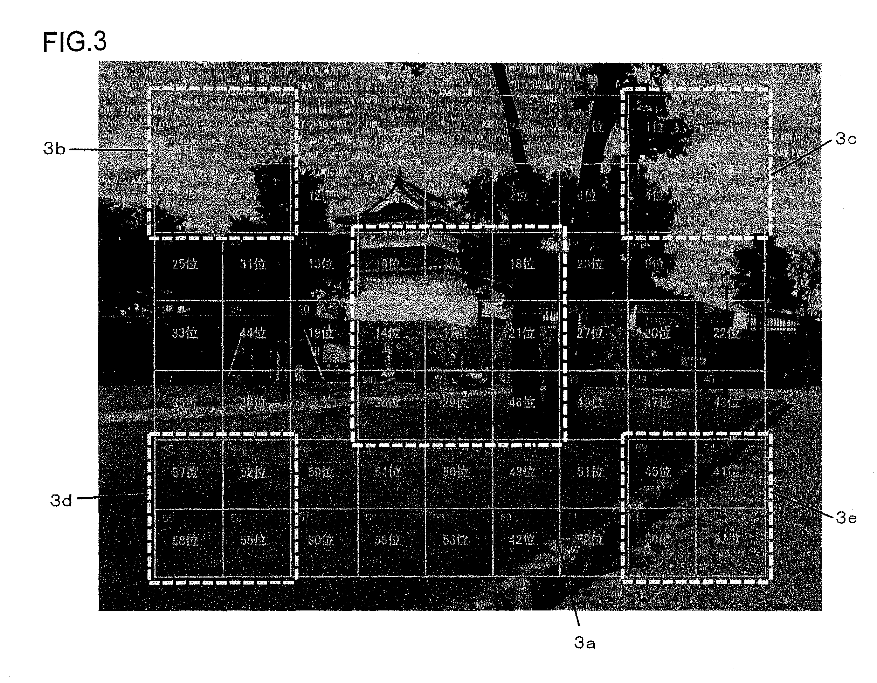

The template extraction unit 104a divides the initial image 10A into 7 (down) x 9 (across) = 63 areas, as shown in FIG. 3. Each divided area constitutes a template candidate. Through the processing to be detailed later, two areas among the 63 areas are extracted as templates. For these purposes, the template extraction unit 104a evaluates the each of the template candidates by using five evaluation values obtained by normalizing; anedgesumvalue, a density standard deviation, a contrast value, a density difference relative to an area surrounding the template and an RGB correlation value. It is to be noted that the template candidates are evaluated in order to select as a template an image pattern likely to assure a high level of matching accuracy.

The template extraction unit 104a calculates the five evaluation values as explained in (A) through (E) below.

(A) Edge sum evaluation value

The template extraction unit 104a first calculates an edge sum value. The term "edge sum value" is used to refer to the sum of values each calculated for one of the pixels present in the template candidate and representing the difference between the density value at the pixel and the density value at an adjacent pixel. It is to be noted that the adjacent pixel, the density value of which is used to calculate the density value difference when calculating the edge sum value may be a pixel adjacent to the pixel along the horizontal direction or a pixel adjacent to the pixel along the vertical direction. The edge sum value (meanEdge) thus calculated is then normalized as expressed in (1) below, so as to calculate the edge sum evaluation value. The corresponding template is scored higher in the evaluation when the normalized value calculated as expressed in (1) below, i.e., the edge sum evaluation value, is greater.

$$(\texttt{meanEdge} - \texttt{min(meanEdge)})/\texttt{Range(meanEdge)} \dots (1)$$

(B) Density standard deviation evaluation value

The template extraction unit 104a first calculates a density standard deviation. The term "density standard deviation" is used to refer to a standard deviation value $\delta$ determined based upon the density values at all pixels present in the subject template candidate. Namely, an average of $\delta$ values calculated in correspondence to each of the R color, G color and the B color at all the pixels present in the template candidate is designated as a density standard deviation for the template candidate. The density standard deviation having been calculated is then normalized in much the same way as the edge sumvalue. The corresponding template candidate scores higher in the evaluation when the normalized value, i.e., the density standard deviation evaluation value, is greater.

(C) Contrast evaluation value

The template extraction unit 104a first calculates a contrast value. Namely, it extracts a brightness value (max) at the pixel with the highest level of brightness among all the pixels present in the subject template candidate and a brightness value (min) at the pixel with the lowest level of brightness among the pixels, and calculates the contrast through an arithmetic operation expressed as (max-min) /255. The contrast value thus calculated is then normalized in much the same way as the edge sum value. The corresponding template candidate scores higher in the evaluation when the normalized value, i.e., the contrast evaluation value, is greater.

(D) Density difference evaluation value indicating density difference relative to an area surrounding the template candidate

The template extraction unit 104a calculates a density difference relative to an area surrounding the template candidate. The term "density difference relative to an area surrounding the template candidate" is used to refer to an absolute value of the difference between the density average in a search area 4a set on the initial image 10a so as to contain the template candidate and thus ranging over a greater area than the template candidate and the density average at the template candidate. The density difference relative to the area surrounding the template candidate thus calculated is normalized in much the same way as the edge sum value. The corresponding template scores higher in the evaluation when the normalized value, i.e., the density difference evaluation value indicating the density difference relative to the area surrounding the template candidate, is greater. The density difference evaluation value thus calculated speeds up the template matching process to be detailed later and ensures that a template candidate with a significant density difference relative to the surrounding area is readily extracted as a template by scoring the template candidate high in the evaluation.

(E) RGB correlation evaluation value

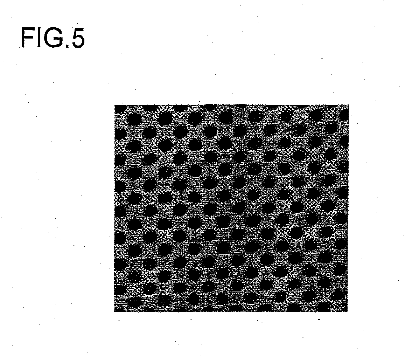

The template extraction unit 104 calculates RGB correlation values. Namely, it executes three correlation calculations expressed as; R value - G value, G value - B value and B value - R value, in correspondence to each pixel present in the template candidate. The RGB correlation values and thus calculated are then normalized in much the same way as the edge sum value. The corresponding template candidate scores higher in the evaluation when the normalized value, i.e., the RGB correlation evaluation value, is smaller. Namely, a template candidate containing a cyclical image pattern such as that shown in FIG. 5 or a gray image area with no contrast, scores low in the evaluation and accordingly, such an image pattern, which will not assure good template matching accuracy in the subsequent template matching process, will not be extracted as a template.

The template extraction unit 104 evaluates the 63 template candidates set on the initial image 10A based upon the five evaluation values calculated as described in (A) through (E), i.e., the edge sum evaluation value, the density standard deviation evaluation value, the contrast evaluation value, the density difference evaluation value indicating that density difference relative to the area surrounding the template candidate and the RGB correlation evaluation value. More specifically, it executes a weighted addition of the five evaluation values in correspondence to each template candidate and then it sorts the 63 template candidates in descending order by ranking them based upon the weighted sums. It is to be noted that each evaluation value is weighted by applying a weighting value determined in advance through testing when calculating the weighted sum of the five evaluation values.

Thus, the template evaluation results indicating the rankings of the individual template candidates, as shown in FIG. 3, are obtained. Based upon the ranking results, the template extraction unit 104a extracts two templates to be used for template matching in conjunction with the combination target image 10B, i.e., the translational correction template and the rotational correction template mentioned earlier. More specifically, the template extraction unit executes the following processing.

The template extraction unit 104a extracts the two templates by ensuring that the translational correction template and the rotational correction template are extracted from positions set apart by a significant distance on the initial image 10A. For instance, the translational correction template may be extracted from an area 3a set near the center of the initial image 10A and the rotational correction template may be extracted from one of areas 3b through 3e set at the four corners inside the initial image 10A in FIG. 3.

As the translational correction template, the highest ranked template candidate in the area 3a should be extracted based upon the ranking results. As the rotational correction template, the template candidate with the highest ranking in the areas 3b through 3e should be extracted. Accordingly, the template candidate ranked seventh is extracted as the translational correction template from the area 3a and the template candidate ranked first is extracted as the rotational correction template from the area 3c in the example presented in FIG. 3.

As a result, two highly ranked candidates can be extracted to be used as the translational correction template and the rotational correction template from positions set apart from each other inside the initial image 10A. It is to be noted that an explanation is given above on an example in which the translational correction template is extracted from the area 3a and the rotational correction template is extracted from one of the areas 3b through 3e. However, the translational correction template and the rotational correction template may be extracted through an extraction method other than that described above as long as they are extracted at positions set apart from each other over a significant distance.

The template matching unit 104b executes template matching on the combination target image 10B by using the translational correction template and the rotational correction template extracted by the template extraction unit 104a, as described above, in order to determine positions in the combination target image 10B with image patterns similar to (substantially matching) the image patterns in the individual templates.

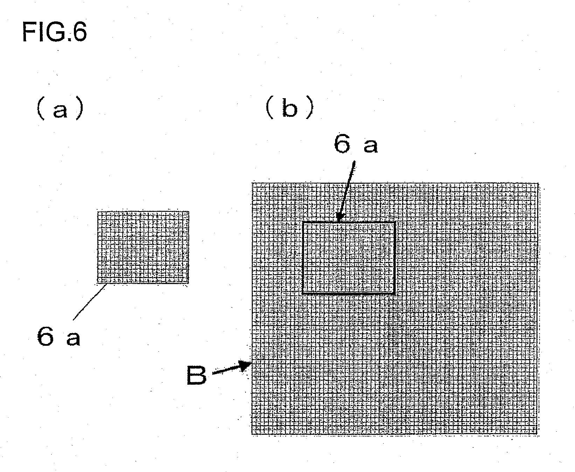

A method that may be adopted in the template matching process is now explained in reference to FIG. 6. The explanation is given by assuming that the template matching unit 104b executes the template matching process by using a template 6a (may be the translational correction template or the rotational correction template) shown in FIG. 6(a). The template matching unit 104b executes matching calculation for the combination target image 10B at the subject position relative to the template 6a by shifting the position in the combination target image 10B by one pixel at a time in correspondence to the template 6a, so as to determine a similarity factor (match factor) indicating the level of similarity between the image patterns in the two images. After executing the matching calculation over the entirety of the combination target image 10B, the template matching unit determines the position at which the level of similarity is the highest in the combination target image 10B, by determining, for instance, the values of the coordinates of the position.

Since the matching calculation for matching the template 6a with the combination target image 10B can be executed by adopting a method of the known art, a detailed explanation of the matching calculation method is not provided. It is assumed that the matching calculation is executed as expressed in (2) below in the embodiment. When the residual sum r, calculated as expressed in (2) below, assumes a smaller value, the level of similarity between the template 6a and the combination target image 10B is higher.

(Expression 1)

$$r = \sum_m \sum_n \left| B_{mn} - A_{mn} \right| \qquad \dots \quad (2)$$

It is to be noted that Bmn represents the density value at a pixel position (row m / column n) within the combination target image 10B and Amn indicates the density value in the template 6a at the pixel position (row m / column n) in the combination target image 10B.

The template matching process explained above is executed by using both the translational correction template and the rotational correction template and, as a result, an image position in the combination target image 10B at which a high level of similarity to the translational correction template is detected and an image position in the combination target image 10B at which a high level of similarity to the rotational correction template is detected can be determined.

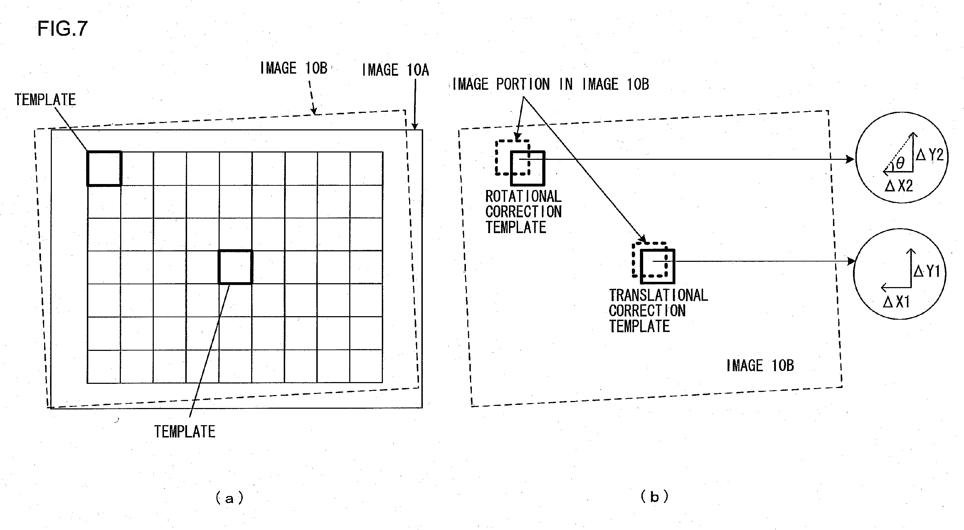

Based upon the template matching results provided by the template matching unit 104b, the image combining unit 104c combines the initial image 10A and the combination target image 10B by superimposing one on top of the other. A specific processing method that may be adopted is now explained in reference to FIG. 7. FIG. 7(a) presents an example of a positional relationship that may exist between the initial image 10A and the combination target image 10B, whereas FIG. 7 (b) illustrates the extent of offset that may be manifested by the initial image 10A and the combination target image 10B.

The image combining unit 104c first calculates that positional misalignment manifested by the initial image 10A and the combination target image 10B along the vertical direction and the horizontal direction by using the translational correction template. Namely, it calculates a horizontal offset quantity $\Delta X1$ and a vertical offset quantity $\Delta Y1$ indicating the extents of horizontal offset and vertical offset of the image position in the combination target image 10B with a high level of similarity to the translational correction template, having been determined by the template matching unit 104b, relative to the position of the translational correction template in the initial image 10A, which manifest when the initial image 10A and the combination target image 10B are set one on top of the other.

During the process, the initial image 10A and the combination target image 10B are set one on top of the other and, in this state, the combination target image 10B is displaced to the image position with the high level of similarity to the translational correction template in the initial image 10A. The extent by which the combination target image is displaced is calculated as an offset quantity. Generally speaking, the plurality of images used for combining images are not likely to manifest a significant image offset and, accordingly, by restricting the search range to, for instance, - 64 pixels ~ + 64 pixels, the processing time can be reduced.

The image combining unit 104c then displaces the combination target image 10B in a translation by an extent matching the calculated offset quantity so as to align the image position in the combination target image 10B with the high level of similarity to the translational correction template with the position of the translational correction template within the initial image 10A, thereby correcting the translational misalignment manifested by the two images. In other words, the combination target image 10B is displaced by $\Delta X1$ along the horizontal direction and $\Delta Y1$ along the vertical direction. As a result, even when two images are captured in succession with the camera angle slightly altered between the takes, the horizontal and vertical positional misalignments manifested by the two images as a result can be corrected accurately.

Next, the image combining unit 104c corrects the rotational positional misalignment manifested by the initial image 10A and the combination target image 10B by using the rotational correction template. The image combining unit 104c calculates a horizontal offset quantity $\Delta X2$ and a vertical offset quantity $\Delta Y2$ indicating the extents of horizontal offset and vertical offset of the image position in the combination target image 10B with a high level of similarity to the rotational correction template, having been determined by the template matching unit 104b, relative to the position of the rotational correction template in the initial image 10A having undergone the translational misalignment correction.

More specifically, the combination target image 10B is displaced to the image position with the high level of similarity to the rotational correction template in the initial image 10A and the extent by which the combination target image is displaced is calculated as an offset quantity. It is to be noted that since the translational correction has already been completed through the processing described earlier, any misalignment manifested by the two images can be assumed to be small. Accordingly, the search range may be restricted to, for instance, -32 pixels ~ +32 pixels so as to minimize the processing time.

If there is still an offset between the two images detected at the rotational correction template position even after correcting the translational misalignment between the two images based upon the translational correction template, the offset can be assumed to be attributable to an offset manifesting along the rotational direction as has been explained in reference to FIG. 2. Accordingly, the image combining unit 104c calculates an offset angle θ based upon the horizontal offset quantity ΔX2 and the vertical offset quantity ΔY2 indicating the extents of the horizontal offset and the vertical offset manifested by the two images at the rotational correction template position (see FIG. 7(b)).

The image combining unit 104c then rotates the combination target image 10B by an extent matching the calculated offset angle θ so as to align the image position in the combination target image 10B with the high level of similarity to the rotational correction template with the position of the rotational correction template within the initial image 10A, thereby correcting the rotational misalignment manifested by the two images. In other words, the combination target image 10B is rotated by the angle θ. As a result, even when two images are captured in succession with the camera angle slightly altered between the takes, the rotational misalignment manifested by the two images as a result can be corrected accurately.

It is to be noted that as long as the offset occurring along the rotational direction is very small, two images may be combined without correcting the rotational offset and the quality of the resulting combined images may not be significantly compromised. Accordingly, the offset manifested along the rotational direction may be corrected only when the offset angle θ is equal to or greater than a predetermined angle, e.g., only when the offset angle is outside a range of - 0.1° through +0.1° and the rotational correction may be skipped if the offset angle is within the ± 0.1° range in the embodiment. It is also to be noted that the predetermined angle used as the threshold value may be a value set in advance or the threshold value may be adjusted freely by the user.

The image combining unit 104c superimposes the initial image 10A and the combination target image 10B having undergone the offset correction processing described above, one on top of the other, to combine these images. As a result, the two images can be combined without any offset.

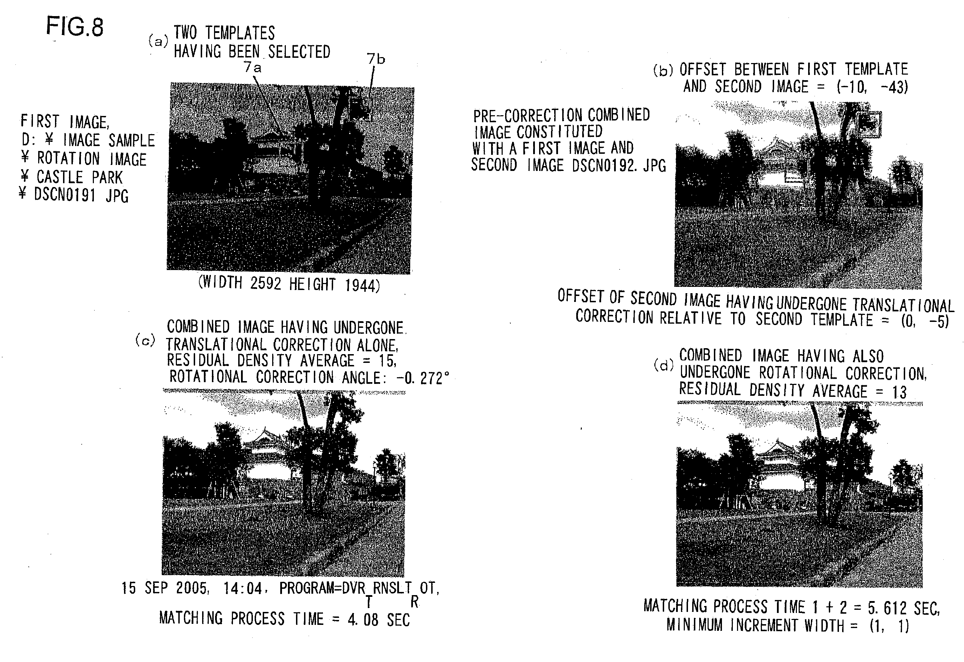

FIG. 8 presents a specific example of the image combining process executed by the image combining unit 104c and the combining results. FIG. 8 (a) shows a specific example of the initial image 10A from which a translational correction template 7a and the rotational correction template 7b have been extracted. FIG. 8 (b) shows a specific example obtained by superimposing the combination target image 10B over the initial image 10A. Since any offset manifested by the two images has not been corrected yet, the images in FIG. 8(b) are misaligned. It is assumed that the offset quantities indicating the offsets manifested by the two images at the translational correction template position have been calculated to be -10 pixels along the horizontal direction and -43 pixels along the vertical direction.

FIG. 8(c) shows an image obtained by correcting the translational offset in the image shown in FIG. 8 (b), i.e., by displacing the combination target image 10B by an extent matching the offset quantities. In other words, the image in FIG. 8(c) has undergone the translational offset correction executed by displacing the combination target image 10B by 10 pixels along the horizontal direction and by 43 pixels along the vertical direction. In addition, it is assumed that the offset angle indicating the rotational offset manifested by the two images at the rotational correction template position is calculated to be - 0.272° for the image shown in FIG. 8 (c) . The absolute value of this offset angle is greater than the predetermined angle (± 0.1°) mentioned earlier and accordingly, the image combining unit 104c rotates the combination target image 10B by an extent matching the offset angle, i.e., by 0.272°, thereby correcting the offset manifesting along the rotational direction. As a result, an image without any offset, such as a shown in FIG. 8(d), is composed.

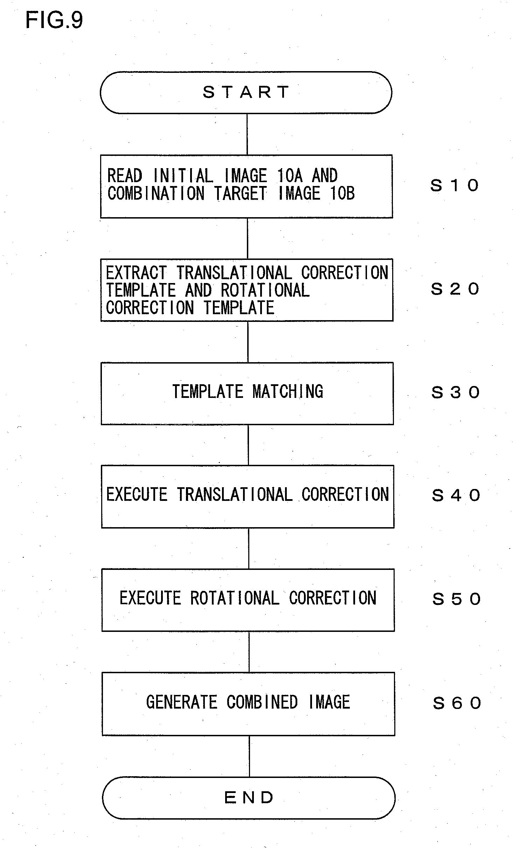

FIG. 9 presents a flowchart of the processing executed by the image combining apparatus 100 in the embodiment. The processing shown in FIG. 9 is executed as an image combining program is read from the HDD 103 and started up in response to an image combining start instruction issued by the user via input device 101.

In step S10, the template extraction unit 104a reads the two images having been selected by the user, i.e., the initial image 10A and the combination target image 10B, from the HDD 103 and then the operation proceeds to step S20. In step S20, the template extraction unit 104a executes the template evaluation processing described earlier and ranks the individual areas set in the initial image 10A based upon the evaluation values (A) through (E) explained earlier. Then, based upon the template evaluation results, the translational correction template and the rotational correction template are extracted from the initial image 10A. Subsequently, the operation proceeds to step S30.

In step S30, the template matching unit 104b executes the template matching process for the combination target image 10B by using the translational correction template and the rotational correction template having been extracted by the template extraction unit 104a as explained above and determines positions at which image patterns within the combination target image 10B are similar (substantially identical) to the image patterns in the individual templates. The operation then proceeds to step S40.

In step S40, the image combining unit 104c calculates the extents of the vertical offset and the horizontal offset of the combination target image 10B relative to the initial image 10A by using the translational correction template and corrects the offset. Subsequently, the operation proceeds to step S50, in which the image combining unit 104c calculates the offset angle indicating the extent of the rotational offset of the combination target image 10B relative to the initial image 10A by using the rotational correction template and corrects the rotational offset. The operation then proceeds to step S60 in which the image combining unit 104c superimposes the two images having undergone the positional misalignment correction, one on top of the other, thereby generating a combined image, before the processing ends.

The following advantages are achieved through the embodiment described above.

(1) The translational correction template is used to correct the translational offset manifested by the initial image 10A and the combination target image 10B, whereas the rotational correction template is used to correct the offset manifested along the rotational direction by the initial image 10A and the combination target image 10B. As a result, compared to the related art, in which template matching is executed by using a single template, the offset manifested by the two images can be corrected with a higher level of accuracy.

(2) When extracting the translational correction template and the rotational correction template from the initial image 10A, the initial image 10A is divided into a plurality of template candidates and then the image patterns in the individual template candidates are evaluated based upon various evaluation values (A) through (E) explained above. Based upon the ranking results indicating the rankings of the various template candidates obtained through the evaluation, the translational correction template and the rotational correction template are extracted. Thus, the optimal ranges to be used as templates can be extracted from the initial image 10A based upon image patterns and this ensures improved accuracy in the template matching.

- Examples of variations -

It is to be noted that the image combining apparatus achieved in the embodiment as described above allows for the following variations.

(1) While an explanation is given above in reference to the embodiment on an example in which two images, i.e., a single initial image 10A and a single combination target image 10B, are used in the image combining, the present invention may also be adopted in conjunction with a plurality of combination target images, i.e., when composing an image by using three or more images. In this case, an image should be composed by correcting the positional misalignments of the plurality of combination target images with the translational correction template and the rotational correction template extracted from the initial image 10A.

(2) An explanation is given above in reference to the embodiment on an example in which the five evaluation values (A) through (E) described earlier are used in the template evaluation. However, the present invention is not limited to this example and only some of the evaluation values (A) through (E) may be used or the template evaluation may be executed based upon evaluation values that include another evaluation value in addition to the evaluation values (A) through (E). Alternatively, the templates may be evaluated by using evaluation values different from the evaluation values (A) through (E).

(3) An explanation is given above in reference to the embodiment on an example in which the individual units 104a through 104c in the control device 104 execute specific processing based upon the image combining program, as shown in the flowchart presented in FIG. 9. However, the present invention is not limited to this example and separate programs independent of one another based upon which the units 104a through 104c individually execute the specific processing may be installed. In such a case, the programs may be called up and executed in sequence. Namely, the processing executed by the template extraction unit 104a in steps S10 and S20 in FIG. 9 may be executed based upon a template extraction program, the processing executed by the template matching unit 104b in step S30 in FIG. 9 may be executed based upon a template matching program and the processing executed by the template combining unit 104c in steps S40 through S60 in FIG. 9 may be executed based upon an image combining program.

(4) An explanation is given above in reference to the embodiment on an example in which the template matching unit 104b executes the matching calculation over the entire combination target image 10B by shifting the position within the combination target image 10B by a single pixel at a time relative to the template 6a. However, the present invention is not limited to this example and the number of matching calculation processing sessions may be reduced by adopting a method for abridging the matching calculation to be explained next.

During the template matching process executed by shifting the combination target image 10B relative to the template 6a, the matching calculation may be abridged by comparing a statistical value representing the image inside the template 6a with a statistical value representing the image in the combination target image 10B at the position at which the matching calculation is to be executed, prior to the actual matching calculation. It is assumed that the statistical values used in this process are density average values. Then, only if the two statistical values are close to each other, the matching calculation is executed for the particular image position, but if the two statistical values are not close to each other, the matching calculation is skipped and the template 6a is shifted.

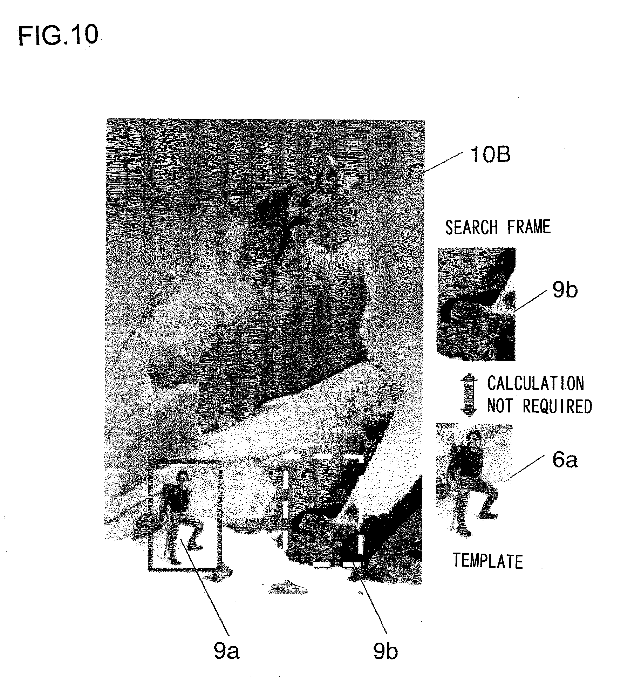

In other words, a decision is first made as to whether or not the two images are similar to each other through a simple arithmetic operation executed by comparing the two statistical values and then the matching calculation is executed only if the two images are similar to each other. As a result, a higher processing speed is achieved through a reduction in the number of matching calculation sessions executed during the template matching process. For instance, in a template matching process executed in conjunction with the combination target image 10B and the template 6a such as those shown in FIG. 10, the matching calculation only needs to be executed over a range such as a range 9a, the image pattern in which is similar (identical) to the image pattern in the template 6a. Namely, since a range such as a range 9b with the image pattern therein completely different from that in the template 6a is excluded from the matching calculation, superfluous processing can be skipped.

(5) In addition, while an explanation is given above in reference to the embodiment on an example in which the template matching unit 104b executes the template matching process by shifting the position in the combination target image 10B by one pixel at a time relative to the template 6a, the present invention is not limited to this example and the extent by which the position in the combination target image 10B is shifted may be adjusted instead. For instance, based upon the immediately preceding matching calculation results, the level of similarity between the template 6a and a specific range within the combination target image 10B may be judged. Then, if the level of similarity is high, it should be decided that the image position with an image pattern matching that of the template 6a is present nearby and accordingly, the extent by which the position in the combination target image 10B is shifted should be reduced. If, on the other hand, the level of similarity is low, it should be decided that the image position with an image pattern matching that in the template 6a is not present in the vicinity and accordingly, the extent by which the position in the combination target image 10B is shifted should be increased.

More specifically, a maximum shift quantity (indicating the number of pixels by which the position is shifted) AA along the horizontal direction and the maximum shift quantity (indicating the number of pixels by which the position is shifted) BB along the vertical direction may be set in advance for the combination target image 10B and the shift quantity for the combination target image 10B may be calculated by multiplying the maximum shift quantities by the similarity factor indicating the level of similarity between the template 6a and the specific range within the combination target image 10B. Namely, the horizontal shift quantity and the vertical shift quantity to be assumed for the combination target image 10B may be calculated as expressed in (3) and (4) below.

```
horizontal shift quantity = floor (AA x (1 - similarity factor))

... (3)


vertical shift quantity = floor (BB x (1 - similarity factor

average for the row))... (4)
```

It is to be noted that the similarity factor calculated in this example assumes a value between 0 and 1. In addition, "floor" represents a function used to round off the value to an integral value.

In this case, since the matching calculation is not unconditionally executed by always shifting the position in the combination target image 10B by one pixel at a time, the number of matching calculation sessions is reduced so as to achieve faster processing. It is to be noted that by adopting this method in combination with the matching calculation abridging method described as variation (4) earlier, the processing can be executed at even higher speed.

While an explanation is given above in reference to the embodiment on an example in which the matching calculation is executed for the template and the combination target image 10B by shifting the position in the combination target image 10B relative to the template, the template may instead be shifted relative to the combination target image 10B.

It is to be noted that as long as the functions characterizing the present invention are not compromised, the present invention is not restricted in any way whatsoever to the specific structure of the embodiment.

The disclosure of the following priority application is herein incorporated by reference:

Japanese Patent Application No. 2005-368224 filed December 21, 2005

**Claims**

1. An image combining method for executing a template matching process to specify matching positions in a plurality of images with image patterns therein substantially matching one another and combining the plurality of images so that the matching positions are aligned with one another, including:

   extraction processing through which a plurality of areas (a plurality of templates) to be used as templates in the template matching process are extracted from a reference image.

2. An image combining method according to claim 1, wherein:

   the plurality of templates include at least one translational correction template used for positional alignment of the reference image and another image along a vertical direction or a horizontal direction and at least one rotational correction template used for positional alignment of the reference image and the other image along a rotational direction.

3. An image combining method according to claim 2, wherein:

   the plurality of templates include both the translational correction template and the rotational correction template.

4. An image combining program for executing a template matching process to specify matching positions in a plurality of images with image patterns therein substantially matching one another and combining the plurality of images so that the matching positions are aligned with one another, enabling a computer to execute:

   an extraction procedure through which a plurality of areas (a plurality of templates) to be used as templates in the template matching process are extracted from a reference image.

5. An image combining program according to claim 4, wherein:

   the plurality of templates include at least one translational correction template used for positional alignment of the reference image and another image along a vertical direction or a horizontal direction and at least one rotational correction template used for positional alignment of the reference image and the other image along a rotational direction.

6. An image combining program according to claim 5, wherein:

   the plurality of templates include both the translational correction template and the rotational correction template.

7. An image combining apparatus comprises an execution device that executes an image combining program according to any of claims 4 through 6.

8. A template extraction method for extracting a template to be used in a template matching process executed to determine matching positions in a plurality of images with image patterns therein substantially matching one another, including:

extraction processing through which an area to be used as the template, among a plurality of areas obtained by dividing a reference image into a plurality of areas, is extracted based upon results of evaluation of image patterns in the plurality of areas executed based upon a specific evaluation value.

9. A template extraction method according to claim 8, wherein:

the specific evaluation value is a normalized value obtained by normalizing at least one of; a sum of density value differences calculated for all pixels in each area with each density value difference representing a difference between a density value at a pixel and a density value at an adjacent pixel, a standard deviation value indicating a standard deviation of density values at all pixels in the area, a value indicating contrast in the area, an absolute value differences between a density average value in the area and a density average value in an area surrounding the area and an RGB correlation value in the area.

10. A template extraction program for extracting a template to be used in a template matching process executed to determine matching positions in a plurality of images with image patterns therein substantially matching one another, enabling a computer to execute:

an extraction procedure through which an area to be used as the template, among a plurality of areas obtained by dividing a reference image into a plurality of areas, is extracted based upon results of evaluation of image patterns in the plurality of areas executed based upon a specific evaluation value.

11. A template extraction program according to claim 10, wherein:

the specific evaluation value is a normalized value obtained by normalizing at least one of; a sum of density value differences calculated for all pixels in each area with each density value difference representing a difference between a density value at a pixel and a density value at an adjacent pixel, a standard deviation value indicating a standard deviation of density values at all pixels in the area, a value indicating contrast in the area, an absolute value differences between a density average value in the area and a density average value in an area surrounding the area and an RGB correlation value in the area.

FIG.1

100

CONTROL DEVICE 104

| TEMPLATE EXTRACTION UNIT |
104a

101 INPUT DEVICE

102 IMAGE INTAKE I/F

| TEMPLATE MATCHING UNIT |
104b

MONITOR 105

103 HDD

| IMAGE COMBINING UNIT |
104c

FIG.2

Roll

ΔY

ΔX

Pitch

ΔZ

IMAGING PLANE

OPTICAL AXIS

Yaw

FIG.3

EP 1 965 350 A1

FIG.4

TEMPLATE CANDIDATE    SEARCH RANGE 4a

15

FIG.5

FIG.6

(a)　　　　　　　(b)

6 a

6 a

B

FIG.7

IMAGE 10B    IMAGE 10A

IMAGE PORTION IN IMAGE 10B

TEMPLATE

ROTATIONAL
CORRECTION
TEMPLATE

TRANSLATIONAL
CORRECTION
TEMPLATE

IMAGE 10B

ΔY2
θ
ΔX2

ΔY1
ΔX1

TEMPLATE

(a)                                (b)

EP 1 965 350 A1

18

# FIG.8

(a) TWO TEMPLATES HAVING BEEN SELECTED

FIRST IMAGE,
D: ¥ IMAGE SAMPLE
¥ ROTATION IMAGE
¥ CASTLE PARK
¥ DSCN0191 JPG

7a    7b

(WIDTH 2592 HEIGHT 1944)

(c) COMBINED IMAGE HAVING UNDERGONE TRANSLATIONAL CORRECTION ALONE, RESIDUAL DENSITY AVERAGE = 15, ROTATIONAL CORRECTION ANGLE: -0. 272°

15 SEP 2005, 14:04, PROGRAM=DVR_RNSLT_OT,
T      R
MATCHING PROCESS TIME = 4. 08 SEC

(b) OFFSET BETWEEN FIRST TEMPLATE AND SECOND IMAGE = (-10, -43)

PRE-CORRECTION COMBINED IMAGE CONSTITUTED WITH A FIRST IMAGE AND SECOND IMAGE DSCN0192. JPG

OFFSET OF SECOND IMAGE HAVING UNDERGONE TRANSLATIONAL CORRECTION RELATIVE TO SECOND TEMPLATE = (0, -5)

(d) COMBINED IMAGE HAVING ALSO UNDERGONE ROTATIONAL CORRECTION, RESIDUAL DENSITY AVERAGE = 13

MATCHING PROCESS TIME 1 + 2 = 5. 612 SEC,
MINIMUM INCREMENT WIDTH = (1, 1)

EP 1 965 350 A1

FIG.9

```
              ┌─────────────────────────┐
              │          START          │
              └─────────────────────────┘
                           │
         ┌─────────────────────────────────┐
         │ READ INITIAL IMAGE 10A AND       │      S10
         │ COMBINATION TARGET IMAGE 10B     │
         └─────────────────────────────────┘
                           │
         ┌─────────────────────────────────┐
         │ EXTRACT TRANSLATIONAL CORRECTION │
         │ TEMPLATE AND ROTATIONAL          │      S20
         │ CORRECTION TEMPLATE              │
         └─────────────────────────────────┘
                           │
         ┌─────────────────────────────────┐
         │        TEMPLATE MATCHING         │      S30
         └─────────────────────────────────┘
                           │
         ┌─────────────────────────────────┐
         │ EXECUTE TRANSLATIONAL CORRECTION │      S40
         └─────────────────────────────────┘
                           │
         ┌─────────────────────────────────┐
         │ EXECUTE ROTATIONAL CORRECTION    │      S50
         └─────────────────────────────────┘
                           │
         ┌─────────────────────────────────┐
         │     GENERATE COMBINED IMAGE      │      S60
         └─────────────────────────────────┘
                           │
              ┌─────────────────────────┐
              │           END           │
              └─────────────────────────┘
```

FIG.10

10B

SEARCH FRAME

9b

CALCULATION
NOT REQUIRED

6a

TEMPLATE

9a          9b

**INTERNATIONAL SEARCH REPORT**

| International application No. |
|---|
| PCT/JP2006/324262 |

A. CLASSIFICATION OF SUBJECT MATTER
*G06T3/00*(2006.01)i, *G06T7/00*(2006.01)i, *H04N1/387*(2006.01)i

According to International Patent Classification (IPC) or to both national classification and IPC

B. FIELDS SEARCHED

Minimum documentation searched (classification system followed by classification symbols)
G06T3/00, G06T7/00, H04N1/387

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-185018 A (Olympus Optical Co., Ltd.), 09 July, 1999 (09.07.99), Full text; all drawings (Family: none) | 1-11 |
| X | JP 7-244722 A (Fuji Photo Film Co., Ltd.), 19 September, 1995 (19.09.95), Full text; all drawings & EP 671707 A2        & US 2003/12456 A1 | 1-11 |
| A | JP 2001-148779 A (Sharp Corp.), 29 May, 2001 (29.05.01), Full text; all drawings (Family: none) | 1-11 |

☐ Further documents are listed in the continuation of Box C.      ☐ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered   to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 19 January, 2007 (19.01.07) | 30 January, 2007 (30.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005293334 A

- JP 2005368224 A